# EUROPEAN PATENT APPLICATION

(11) **EP 2 713 303 A1**
(43) Date of publication of application: **02.04.2014**
(21) Application number: 12186460.7
(22) Date of filing: 28.09.2012
(51) Int. Cl.: G06F 21/62

(54) **Area of responsibility based access in control systems**

(71) Applicant: ABB Technology AG, 8050 Zürich (CH)
(72) Inventor: Alvarez, Fernando, 5417 Untersiggenthal (CH); Hohlbaum, Frank, 79713 Bad Säckingen (DE); Meuli, Martin, 8532 Warth (CH); Deverson, Richard, 5430 Wettingen (CH)
(74) Representative: ABB Patent Attorneys

(57) **Abstract**

The invention relates to Industrial Automation and Control Systems, in particular to Substation Automation systems with a standardized configuration representation. More particularly, it relates to central user account management and device access control in such systems. The invention further relates to a method of accessing an Intelligent Electronic Device IED 1 in an Industrial Automation and Control System IACS for controlling an industrial process, wherein the IED 1 being assigned to one IED area defined by attributes of the industrial process, comprising assigning a multi-area identifier UserAoR indicative of two distinct IED areas to a user (2)) of the IACS, verifying whether the multi-area identifier assigned to the user (2) is indicative of the IED area, and denying access to the user (2) unless the assigned multi-area identifier is indicative of the IED area.

## Description

### FIELD OF THE INVENTION

The invention relates to Industrial Automation and Control Systems, in particular to Substation Automation systems with a standardized configuration representation. More particularly, it relates to central user account management and device access control in such systems.

### BACKGROUND OF THE INVENTION

Substation Automation systems supervise, protect and control substations in high and medium-voltage electrical power networks, by means of Intelligent Electronic Devices, or Protection and Control devices, allocated to the bays and/or to the primary equipment of the substation. These devices may repeatedly need to be accessed by various users, such as commissioning or maintenance engineers. With the arrival of the latest security requirements and security standards, especially the Smart Grid security standard IEC 62351-8, the principle of central user account management including provision of user credentials to users has become an imperative for utilities. In the present context, user credentials do include IEC 62351-8 role information defining access rights to a device. Credentials of a human user may include, or are protected by means of, a user name/password combination, an IEC 62351-8 SW token, or a X.509 certificate and associated private key issued by a trusted certificate authority. The certificate and/or the private key of the user may be stored on a physical token such as a USB stick, RFID tag, or Smart Card, and are accessible via an appropriate token reader.

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, so-called Intelligent Electronic Devices (IED), responsible for protection, control and monitoring of the primary devices. The IEDs may be assigned to hierarchical levels, i.e. the station level, the bay level, and the process level, the latter being separated from the bay level by a so-called process interface. The station level of the SA system includes an Operator Work Station (OWS) with a Human-Machine Interface (HMI) and a gateway to a Network Control Centre (NCC).

A communication standard for communication between the secondary devices of a substation has been introduced by the International Electrotechnical Committee (IEC) as part of the standard IEC 61850 entitled "communication networks and systems in substations". For non-time critical messages, IEC 61850-8-1 specifies the Manufacturing Message Specification (MMS, ISO/IEC 9506) protocol based on a reduced Open Systems Interconnection (OSI) protocol stack with the Transmission Control Protocol (TCP) and Internet Protocol (IP) in the transport and network layer, respectively, and Ethernet as physical media.

SA systems based on IEC61850 are configured and described by means of a standardized configuration representation or formal system description called Substation Configuration Description (SCD). An SCD file comprises the logical data flow between the IEDs on the basis of message types or data sets, i.e. for every message source, a list of destination or receiver IEDs, the message size in terms of data set definitions, as well as the message sending rates for all periodic traffic. The SCD file likewise comprises the relation between the IEDs as well as the functionality which the IEDs execute on behalf of the substation process or switch yard. SA systems with IEC 61850 have different architectures and different ways of allocating functionality to Logical Devices (LD) or to physical devices (IEDs). The names of some IEDs are even dependent on the IED manufacturer and/or the IED purpose.

IEC 61850-6 has introduced a way of identifying data by functional designations as defined in IEC 81346, based on the presumed long-term stable functional meaning of the data in relation to the switch yard or primary system. Accordingly, the Substation Configuration Description (SCD) file of a SA system provides, in the substation section within the SCD file where Logical Node LN instances are allocated to the functional elements or pieces of primary equipment in the substation structure, for unambiguous structured IED functional names that relate to the configuration or design of the substation.

At present, seven functional levels (substation/voltagelevel/bay/function/sub-function/equipment/sub-equipment) are defined. The typical length for the alphanumeric part of any IEC 81346 identification is 3 characters; in case of one additional sublevel 6 characters. An exemplary functional name for an exemplary substation LN instance reads AA1E1Q3QA1CSWI.Pos.stVal and comprises the substation designation (AA1), the voltage level (E1), the bay designation (Q3), the primary equipment designation (QA1) as well as the (LN) class (CSWI), LN data (Pos) and LN attribute (stVal).

Although some preferred embodiments recited in the specification relate to substation automation, the invention is applicable in a wider range of IACS, specifically, in smart grids as defined in the Smart Grid security standard IEC 62351-8, and in wind or hydro applications foreseen in IEC 61850. "Smart Grid" or "Distribution Automation" communication includes applications that consist of a city-wide network of smart meters and distribution monitoring sensors. Smart meters in an urban Smart Grid application will include electric, gas, and/or water meters typically administered by one or multiple utility companies. These meters will be capable of advanced sensing functionalities such as measuring the quality of electrical service provided to a customer, providing granular interval data, or automating the detection of alarm conditions. In addition, they may be capable of advanced interactive functionalities, which may invoke an actuator component, such as remote service disconnect or remote demand reset.

### DESCRIPTION OF THE INVENTION

It is therefore an objective of the invention to propagate the use of the area-of-responsibility concept as an additional access control criteria in Industrial Automation and Control Systems. This objective is achieved by a method of accessing an Intelligent Electronic Device IED and an IED according to the independent claims. Preferred embodiments are evident from the dependent patent claims, wherein the claim dependency shall not be construed as excluding further meaningful claim combinations.

According to the invention, an Intelligent Electronic Device IED in an Industrial Automation and Control System IACS for controlling an industrial process is to be accessed where the IED is assigned to a single IED area. The IED area is defined by attributes of or may be otherwise related to the industrial process, where the attributes used may be cumulated or concatenated geographical and/or functional attributes. A multi-area identifier termed UserAoR is assigned to a user of the IACS, where such identifier is indicative of, or coding, at least two distinct IED areas. The UserAoR may be set up as an extension of the standard IEC 62351-8 Area of Responsibility concept and to conventional user roles in the IACS. The UserAoR may comprise a string of N alphanumeric and special characters, and may be part of user credentials or a user token.

Following IED access request by the user at any time during regular operation of the IACS, the multi-area identifier of the user is verified to be indicative of the IED area of the IED. The verification may be carried out directly by the IED, following or prior to authentication of the user attempting to access the IED based on user credentials name, password, role etc. The access is denied unless the user's assigned multi-area identifier is indicative of the IED area. Hence the area match constitutes a necessary condition for access, where further restrictions may apply to the user.

In an advantageous embodiment of the invention, the multi-area identifier UserAoR is a regular expression providing concise and flexible means to specify and recognize strings of text, such as particular characters, words, or patterns of characters. The step of verifying comprises evaluating or expanding the regular expression to verify whether the multi-area identifier assigned to the user is indicative of the IED area.

In a preferred variant of the invention, a string match is performed between the UserAoR and an IEDAreaString indicative of the IED area. The multi-area identifier verification according to the invention is only executed in case the string match between the UserAor and the IEDAreaString fails. IEDs performing such initial string match ascertain compatibility with IEC 62351-8 because the UserAoR may be a standard AoR string of a conventional user instead of a regular expression. However, in case of the UserAoR being a regular expression containing special characters, a character-wise string match is bound to fail. The IEDAreaString may be ambiguous in the sense of several IEDs having the same IEDAreaString.

In a preferred embodiment of the invention, a definition of the area to which the IED is assigned to includes an attribute indicative of an IED device type. This enables establishing further access restrictions to the user based on IED device type.

In a further variant of the invention, each IED of a plurality of IEDs of the IACS has an unambiguous structured IED name, wherein the naming may follow a functional naming convention such as IEC 81346. In particular, the IED name defines the IED area to which the IED is assigned.

In a further advantageous embodiment, the IACS is a Substation Automation (SA) System for a T&D substation with an SCD according to IEC 61850. Additionally, a definition of the area to which the IED is assigned includes attributes indicative of a substation topology such as substation, voltage level, bay etc.

The present invention also relates to an Intelligent Electronic Device IED in an Industrial Automation and Control System IACS for controlling an industrial process, the IED being assigned to one IED area defined by attributes of the industrial process, adapted to receive from a user of the IACS attempting to access the IED a user token with a multi-area identifier, i.e. the UserAoR, indicative of two distinct IED areas, and further adapted to deny access to the user unless the multi-area identifier is indicative of the IED area to which the IED is assigned. Preferably, the IED has a regular expression engine for evaluating a regular expression in order to verify whether the multi-area identifier assigned to the user is indicative of the IED area of the IED.

The invention provides a method for accessing an IED by restricting access to authorised users only in a safe and easy way with an implementation easily applied to devices within an IACS.

### BRIEF DESCRIPTION OF THE DRAWINGS

The subject matter of the invention will be explained in more detail in the following text with reference to preferred exemplary embodiments which are illustrated in the attached drawings, in which:

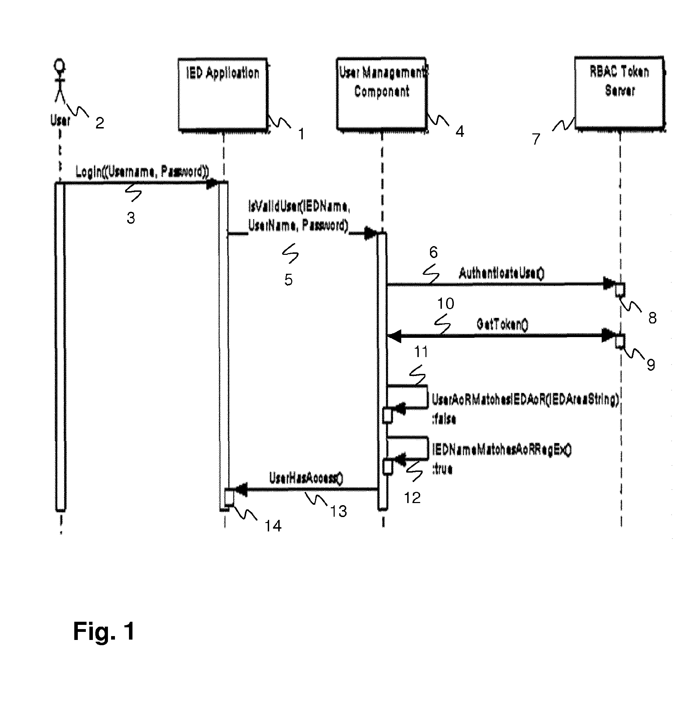

Fig. 1 schematically shows a method of accessing an IED application by a user.

### DETAILED DESCRIPTION OF PREFERRED EMBODIMENTS

Fig.1 shows schematically a method of accessing an IED 1 by a user 2. The user 2 generally uses login information 3 such as a user name and a password to get access to the IED 1 or an IED application. The IED 1 is part of an IACS for controlling an industrial process, i.e. a primary process. Within the IACS the IED is initially assigned to a single IED area, which may be defined by cumulated or concatenated geographical and/or functional attributes of the industrial process. In addition the user 2 is assigned a multi-area identifier UserAoR as an extension of the standard 62351-8 AoR indicative of two or a multitude of distinct IED areas, i.e. an extension of the standard 62351-8 AoR as a string of N alphanumeric and special characters as part of the user credentials or the user token 9.

The IED 1 is evaluating the users 2 login information 3 by accessing the IEDs 1 user management component 4. This is generally carried out as a login request 5 containing the IEDs name and the users 2 login information 3. The user management component 4 authenticates the user 2 by sending a request 6 to a server storing user tokens, where the server 7 may be a role-based access control RBAC server 7. Following a successful authentication request 6, i.e. the users 2 login information 3 matches the information 8 on the server 7, the user management component 4 requests the users 2 token 9 from the server 7, where the token 9 includes all attributes assigned to the user 2.

After a successful token request 10 the user management component 4 proceeds, in step 11, to a character-wise match of the UserAoR to the IEDAreaString (denoted as UserAoRmatchesIEDAoR?), i.e. the IED 1 determines if the device's area matches exactly the string stored in the AoR attribute of the users token 9 in accordance with IEC62351-8. In case of a match the user management component 4 grants access to the user 2.

For a failed match 11, the user management component 4 evaluates, in step 12, the UserAoR as a regular expression to verify if the UserAoR is indicative of the IED area (denoted as IEDNameMatchesAoRRegEx?). In the affirmative, the user 2 is allowed to access the IED 1 and access notification 13 is sent from the IEDs user management component 4 to its application including access grant information 14.

The invention depends on IEC81346 standard for structural naming of objects in a system. Rules and principles defined in IEC81346 ensure that names of objects are unambiguous. The IEC81346 standard is applied to any domain, including Substation Automation systems.

The rules of IEC81346 allow defining a functional name for a device that contains information about what a device does, i.e. its type, as well as a hierarchy which defines where device function is in relation to other objects. In particular, IEC81346 allows defining a device functional name that shows whether it is a control or protection device, and to which Bay, Voltage Level or Substation it is assigned.

Therefore, the same rules are applied when examining the device functional name to attempt to extract information about the functional hierarchy and device type, i.e. control and/or protection.

The IEC81346 rules allow defining a regular expression that can be applied to an IEC81346 functional name to determine if the name matches. The regular expression represents the area or areas a user can access, as well as the function of the device.

The multi-area identifier UserAoR as a security area access permission attribute may be a character string. In particular, the multi-area identifier UserAoR may be a wildcard string. A wildcard string may be a character string having special characters that represent a placeholder for other characters. For example, the character "?" may represent one arbitrary character or the character "*" may represent an arbitrary character string. This allows the use of regular expressions in the definition of the multi-area identifier UserAoR. A regular expression may be an expression comprising a wildcard string. For example, the multi-area identifier UserAoR may be "AA1*" as a regular expression to be used for string matching, representing all possible character strings starting with "AA1".

In the following table examples are given for regular expressions comprising wild cards representing specific restrictions to the user. The first column shows the specific restriction to the user, the second column shows the UserAoR as a regular expression, and the third column gives examples of IEDAreaStrings indicative of IED areas of exemplary IEDs that the user may or may not get access to according to his UserAoR.

| **Restriction** | **UserAoR** | **IEDAreaString - Results** |
|---|---|---|
| User can only access substations Baden and Zürich | (AA1\|AA221)(?![0-9]) | AA13H1Q1KF1 - No Match, no access |
| | | AA221B1Q5FN2 - Match, access |
| | | AA1KF101- Match, access |
| User can access all devices at 500 kV | B([0-9]\|[1-9][0-9]\|1[0-9][0-9]) | AA221B1Q5FN2 - Match, access AA13H1Q1KF1 - No Match, no access |
| | | AA1KF101 - No Match, no access |
| | | AA1D1Q1KF1 - No Match, no access |
| User can access all control devices and communication devices (switches/gateways) | KF([0-9]\|[1-9][0-9]\|1[0-9][0-9]\|2[0-9][0-9]\|3[0-9][0-9]\|4[0-9][0-9])(?![0-9])(?![0-9]) | AA1KF101 - Match, access |
| | | AA1D1Q1KF1- Match, access |
| | | AA1D1Q1FN1 - No Match, no access |
| | | AA221B1Q5FN2 - No Match, no access |
| User can access all protection devices in all substations. | FN([0-9)(?![0-9]) | AA221B1Q5FN2 - Match, access |
| | | AA1D1Q1KF1 - No Match, no access |
| | | AA1D1Q1KF101 - No Match, no access |

The restriction of example 3, where the user can access all control devices and communication devices, leads to a long UserAoR of 86 characters. However, the standard 62351-8 AoR only allows 64 bytes to be used, thus the UserAoR of example 3 is exceeding this limit. Therefore, assigning a complex UserAoR may be difficult within the 62351-8 AoR limit. However, to solve this limitation problem the UserAoR may contain a reference to another custom attribute which can contain a longer string or the UserAoR limit of 64 bytes is explicitly increased to allow storing more characters.

The third column of the table above contains examples for the IEDAreaString, such as AA13H1Q1KF1, and a result of a comparison of the UserAoR with the IEDAreaString, containing "match" or "no match" and "access" and "no access". The IEDAreaString contains sub-strings according to the following table describing specifics of an IED, e.g. assigned Substation, Voltage Level, Bay, etc.

| **Topology** | **Name** | **String** |
|---|---|---|
| Substation | Baden | AA1 |
| Substation | Zürich | AA221 |
| Substation | Dättwil | AA13 |
| Voltage Level | 33 kV | H1 |
| Voltage Level | 220 kV | D1 |
| Voltage Level | 500 kV | B1 |
| Bay | Baden - Mellingerstrasse | Q1 |
| Bay | Baden - Badstrasse | Q2 |
| Bay | Baden - Haselstrasse | Q3 |
| Bay | Zürich - Bahnhofstrasse | Q1 |
| Bay | Zürich - Limmatstrasse | Q5 |
| Bay | Zürich - Mühlegasse | Q13 |
| Bay | Dättwil - Kantonspital | Q1 |
| Bay | Dättwil - Segelhof | Q2 |
| Bay | Dättwil - Täfere | Q7 |
| Control Device | Bay controller No 1. | KF1 |
| Protection Device | Bay protection No 1. | FN1 |
| Bay Level Switch | Bay switch No 1. | KF101 |
| Station Level Switch | Station Switch Ring 1 | KF101 |
| Gateway | Gateway | KF21 |

According to the table above, the IEDAreaString given as example in the first table describe a function summarized in the following table, e.g. the IEDAreaString "AA1D1Q1KF1" describes a device in "Baden", at a Voltage Level of "220kV", located at "Mellingerstrasse", and being "control device 1".

## Claims

1. A method of accessing an Intelligent Electronic Device IED (1) in an Industrial Automation and Control System IACS for controlling an industrial process, the IED (1) being assigned to one IED area defined by attributes of the industrial process, comprising
- assigning a multi-area identifier UserAoR indicative of two distinct IED areas to a user (2) of the IACS,
- verifying whether the multi-area identifier assigned to the user (2) is indicative of the IED area, and
- denying access to the user (2) unless the assigned multi-area identifier is indicative of the IED area.

2. The method of claim 1, wherein the multi-area identifier UserAoR is a regular expression, and wherein the step of verifying comprises evaluating the regular expression to verify whether the multi-area identifier assigned to the user is indicative of the IED area.

3. The method of claim 2, comprising performing a character-wise match between the UserAoR and an IEDAreaString indicative of the IED area, and proceeding to the step of verifying in case of no match.

4. The method of claim 1, wherein a definition of the area includes an attribute indicative of an IED device type.

5. The method of claim 4, wherein each IED (1) of a plurality of IEDs (1) of the IACS has an unambiguous structured IED name, and wherein the IED name defines the IED area to which the IED (1) is assigned.

6. The method of any of claims 1 to 5, wherein the IACS is a Substation Automation (SA) System for a T&D substation with an SCD according to IEC 61850, and wherein a definition of the area includes attributes indicative of a substation topology.

7. An Intelligent Electronic Device IED (1) in an Industrial Automation and Control System IACS for controlling an industrial process, the IED (1) being assigned to one IED area defined by attributes of the industrial process, adapted to
- receive from a user (2) of the IACS attempting to access the IED (1) a multi-area identifier UserAoR indicative of two distinct IED areas, and
- adapted to deny access to the user (2) unless the multi-area identifier is indicative of the IED area to which the IED (1) is assigned.

8. The Intelligent Electronic Device IED (1) of claim 7, wherein the multi-area identifier UserAoR is a regular expression, the IED further adapted to evaluate the regular expression to verify whether the multi-area identifier assigned to the user (2) is indicative of the IED area.

9. The Intelligent Electronic Device IED (1) of claim 8, adapted to perform a string match between the UserAoR and an IEDAreaString indicative of the IED area, and adapted to verify whether the multi-area identifier assigned to the user (2) is indicative of the IED area in case of no match.
